# EUROPÄISCHE PATENTSCHRIFT

(11) **EP 1 929 600 B1**
(45) Veröffentlichungstag und Bekanntmachung des Hinweises auf die Patenterteilung: **03.12.2008**
(21) Anmeldenummer: 06792079.3
(22) Anmeldetag: 15.09.2006
(51) Int. Cl.: H02G 3/30

(54) **VORRICHTUNG ZUM HALTEN EINER LÄNGLICHEN GEGENSTANDSANORDNUNG**
DEVICE FOR HOLDING ARRANGEMENT OF OBLONG OBJECTS
DISPOSITIF POUR MAINTENIR UN ENSEMBLE OBJET OBLONG

(30) Priorität: 24.09.2005 DE 102005045840
(43) Veröffentlichungstag der Anmeldung: 11.06.2008
(73) Patentinhaber: A. RAYMOND ET CIE, 38000 Grenoble (FR)
(72) Erfinder: CHIORBOLI, Gianni, I-13040 Carisio (IT)
(74) Vertreter: Rüttgers, Joachim
(86) Internationale Anmeldenummer: PCT/EP2006/008994
(87) Internationale Veröffentlichungsnummer: WO 2007/033797

(56) Entgegenhaltungen:
- DE-U1- 8 911 414
- DE-U1- 9 317 983
- GB-A- 1 242 278
- US-A- 3 302 913

## Beschreibung

Die Erfindung betrifft eine Vorrichtung gemäß dem Oberbegriff des Patentanspruches 1.

Eine derartige Vorrichtung ist aus GB 1 242 278 A bekannt. Die gattungsgemäße Vorrichtung zum Halten einer länglichen Gegenstandsanordnung verfügt über einen Befestigungskörper zum Befestigen an einem Trägerteil und weist ein Schlingband auf, das mit einem Ende mit dem Befestigungskörper in Verbindung steht. Weiterhin ist ein Bandaufnahmeteil vorhanden, das über wenigstens einen biegsamen Verbindungsabschnitt auf einer Seite des Befestigungskörpers angeordnet und mit dem Befestigungskörper verbunden ist, wobei das Schlingband in einem Bandbefestigungsbereich direkt mit dem Befestigungskörper verbunden ist und wobei das Bandaufnahmeteil im relaxierten Zustand des oder jedes Verbindungsabschnittes auf der dem Bandbefestigungsbereich gegenüberliegenden Seite des Befestigungskörpers liegt.

Aus US-A-3,302,913 und aus DE 93 17 983 U1 sind Vorrichtungen zum Halten einer länglichen Gegenstandsanordnung bekannt, die über einen Befestigungskörper zum Befestigen an einem Trägerteil verfügen. An einem Ende ist der Befestigungskörper mit einem Rastfuß zum Verrasten in einer in dem Trägerteil ausgebildeten Ausnehmung ausgebildet. Auf der dem Rastfuß gegenüberliegenden Oberseite des Befestigungskörpers sind ein Schlingband und über einen Verbindungsabschnitt ein Bandaufnahmeteil ausgebildet, die miteinander in Eingriff bringbar sind, um die Gegenstandsanordnung an der dem Rastfuß gegenüberliegenden Oberseite des Befestigungskörpers aufliegend zu halten.

Aus DE 89 11 414 U1 ist eine Vorrichtung zum Halten einer länglichen Gegenstandsanordnung bekannt, die über einen Befestigungskörper zum Befestigen an einem Trägerteil verfügt und ein Schlingband aufweist, das mit einem Ende mit dem Befestigungskörper in Verbindung steht. Weiterhin ist ein Bandaufnahmeteil vorhanden, das über einen starren Verbindungsabschnitt auf der anderen Seite des Befestigungskörpers angeordnet und mit dem Befestigungskörper verbunden ist.

Eine weitere als Kabelbinder ausgebildete Vorrichtung ist aus EP 0 751 597 A1 bekannt. Bei diesem vorbekannten Kabelbinder ist an einem zum Befestigen an einem Trägerteil eingerichteten Befestigungskörper über einen biegsamen Verbindungsabschnitt ein Bandaufnahmeteil angeformt. An der dem Verbindungsabschnitt gegenüberliegenden Seite des Bandaufnahmeteiles ist ein Ende eines Schlingbandes angesetzt, das somit indirekt mit dem Befestigungskörper in Verbindung steht. Das freie Ende des Schlingbandes ist zum Halten insbesondere von mehreren Kabeln als Gegenstandsanordnung in das Bandaufnahmeteil einführbar und nach Straffen festlegbar.

Der Erfindung liegt die Aufgabe zugrunde, eine Vorrichtung der eingangs genannten Art anzugeben, bei der die Gegenstandsanordnung sehr dicht an dem Befestigungskörper positionierbar ist und die sich durch eine hohe Variabilität bezüglich der Anzahl sowie Größe der zu haltenden Gegenstandsanordnung auszeichnen.

Diese Aufgabe wird bei einer Vorrichtung der eingangs genannten Art erfindungsgemäß mit den kennzeichnenden Merkmalen des Patentanspruches 1 gelöst.

Durch die erfindungsgemäße Anbindung des Bandaufnahmeteiles an dem Befestigungskörper liegen der zu haltende Gegenstand beziehungsweise die zu haltenden Gegenstände bei gestrafftem Schlingband unter Umbiegen des Bandaufnahmeteiles im Extremfall bis auf die Seite des Schlingbandes an dem Befestigungskörper an, wobei durch das Umbiegen des Bandaufnahmeteiles bezüglich des umschlungenen Gesamtquerschnittes eine große Einsatzbreite geschaffen ist.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung,
- Fig. 2: in einer vergrößerten Ansicht das Ausführungsbeispiel gemäß Fig. 1 im Bereich eines Befestigungskörpers,
- Fig. 3: im Schnitt das Ausführungsbeispiel gemäß Fig. 1 und Fig. 2 im Bereich des Befestigungskörpers,
- Fig. 4: in einer Seitenansicht das Ausführungsbeispiel gemäß Fig. 1 bis Fig. 3 mit einem in ein Bandaufnahmeteil eingeführten Schlingband für eine Gegenstandsanordnung mit einem verhältnismäßig großen Gesamtquerschnitt und
- Fig. 5: in einer Seitenansicht das Ausführungsbeispiel gemäß Fig. 1 bis Fig. 3 mit einem in ein Bandaufnahmeteil eingeführten Schlingband für eine Gegenstandsanordnung mit einem verhältnismäßig kleinen Gesamtquerschnitt.

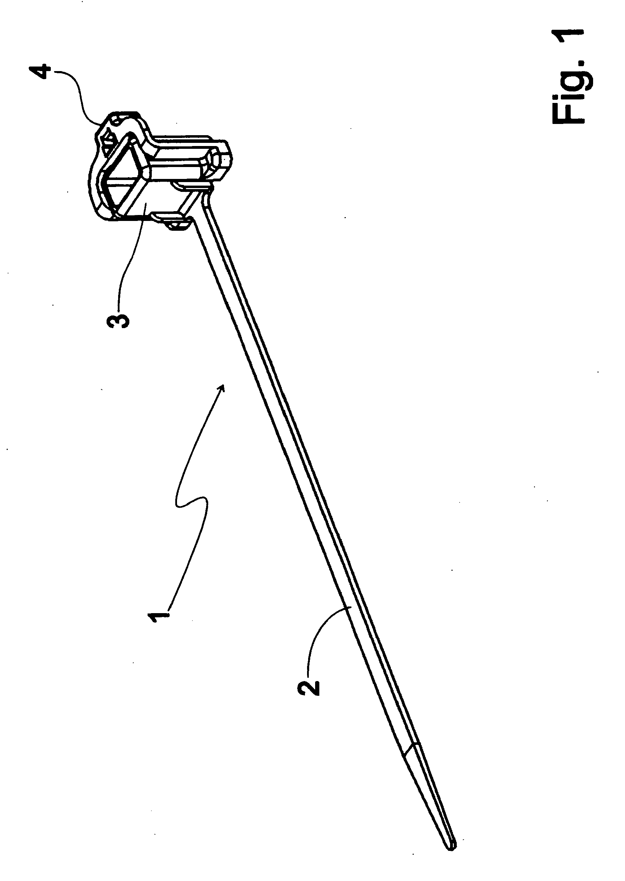

Fig. 1 zeigt in einer perspektivischen Ansicht ein Ausführungsbeispiel einer erfindungsgemäßen Vorrichtung, die als Kabelbinder 1 zum Halten von vorzugsweise mehreren Kabeln einer länglichen Gegenstandsanordnung ausgebildet ist. Der Kabelbinder 1 verfügt über ein längliches, verhältnismäßig langes streifenartiges Schlingband 2, das mit einem Ende an einem Befestigungskörper 3 mit einer quaderförmigen Grundform angesetzt ist. Der Befestigungskörper 3 dient zum Befestigen an einem in Fig. 1 nicht dargestellten Trägerteil. Weiterhin verfügt der Kabelbinder 1 über ein Bandaufnahmeteil 4, das mit dem Befestigungskörper 3 verbunden ist.

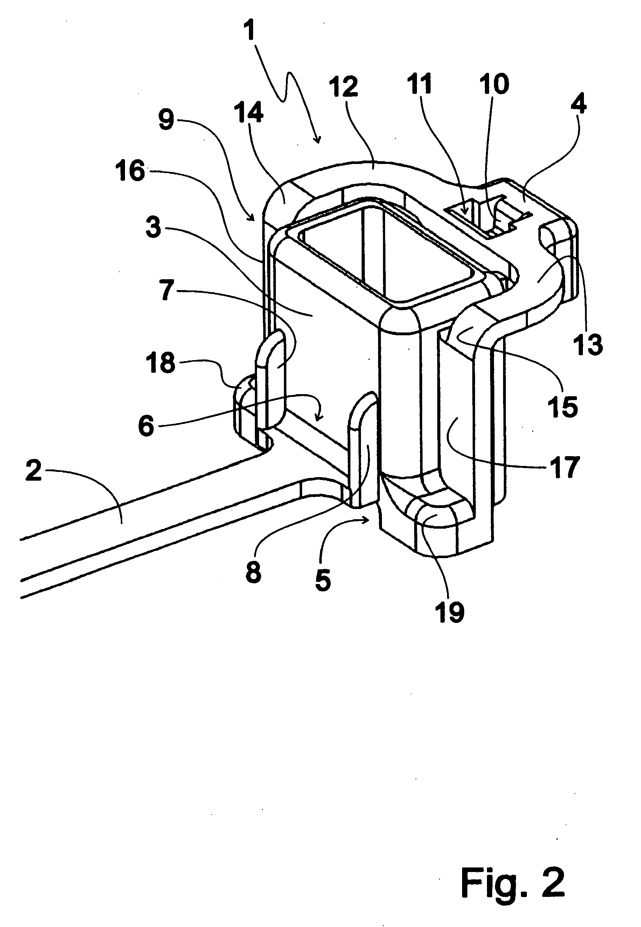

Fig. 2 zeigt den Kabelbinder 1 gemäß Fig. 1 in einer vergrößerten Darstellung im Bereich des Befestigungskörpers 3 mit einem Bandaufnahmeteil 4 in einer relaxierten Anordnung. Aus Fig. 2 ist ersichtlich, dass das Schlingband 2 in einem in der Darstellung gemäß Fig. 2 unten liegenden Fußbereich 5 in einem Bandbefestigungsbereich 6 an einer Breitseite des Befestigungskörpers 3 angesetzt ist. Aus Fig. 2 ist erkennbar, dass beidseitig des Schlingbandes 2 im Bandbefestigungsbereich 6 zwei Klemmrippen 7, 8 ausgebildet sind, die sich von dem Fußbereich 5 weg in Richtung eines in der Darstellung gemäß Fig. 2 oben angeordneten Kopfbereiches 9 des Befestigungskörpers 3 erstrecken und in Richtung des Schlingbandes 2 von dem Befestigungskörper 3 abstehen. Vorzugsweise erstrecken sich die Klemmrippen 7, 8, wie in Fig. 2 dargestellt, von dem Fußbereich 5 bis etwa in den Mittenbereich des Befestigungskörpers 3.

Weiterhin lässt sich Fig. 2 entnehmen, dass das Bandaufnahmeteil 4 eine Rastzunge 10 aufweist, die sich in einen Durchsteckraum 11 erstreckt. An das Bandaufnahmeteil 4 sind seitlich Anbindungsbügel 12, 13 angesetzt, die sich von der dem Bandbefestigungsbereich 6 gegenüberliegenden Seite des Befestigungskörpers 3 zunächst quer zu der Längsrichtung des Schlingbandes 2 entlang der anderen Breitseite des Befestigungskörpers 3 erstrecken und dann in Richtung der Längsrichtung des Schlingbandes 2 umgebogen sind, sodass sie parallel zu den Schmalseiten des Befestigungskörpers 3 liegen.

Die parallel zu den Schmalseiten des Befestigungskörpers 3 liegenden Enden der Anbindungsbügel 12, 13 gehen in jeweils einen in Richtung des Fußbereiches 5 umgebogenen biegsamen Verbindungsabschnitt 14, 15 über, die in der Darstellung gemäß Fig. 2 relaxiert sind, wobei die Verbindungsabschnitte 14, 15 wiederum an an den Schmalseiten des Befestigungskörpers 3 angeformten Anbindungsrippen 16, 17 angesetzt sind. Die Anbindungsrippen 16, 17 erstrecken sich von dem Kopfbereich 9 bis in den Fußbereich 5 und liegen in etwa in der Mitte der Schmalseiten des Befestigungskörpers 3.

Zwischen dem Bandbefestigungsbereich 6 und den im Fußbereich 5 liegenden Enden der Anbindungsrippen 16, 17 ist jeweils eine Sockelplatte 18, 19 ausgebildet, die die Auflagefläche des Kabelbinders 1 im Fußbereich 5 und die Stabilität insgesamt erhöht.

Gemäß der in Zusammenhang mit Fig. 2 erläuterten Anordnung des Schlingbandes 2 und des Bandaufnahmeteiles 4 ergibt sich, dass der Bandbefestigungsbereich 6 auf der dem Bandaufnahmeteil 4 gegenüberliegenden Seite des Befestigungskörpers 3 liegt und dass das Bandaufnahmeteil 4 sowie der Bandbefestigungsbereich 6 an einander gegenüberliegenden Endbereichen des Befestigungskörpers 3, nämlich dem Fußbereich 5 und dem Kopfbereich 9, angeordnet sind.

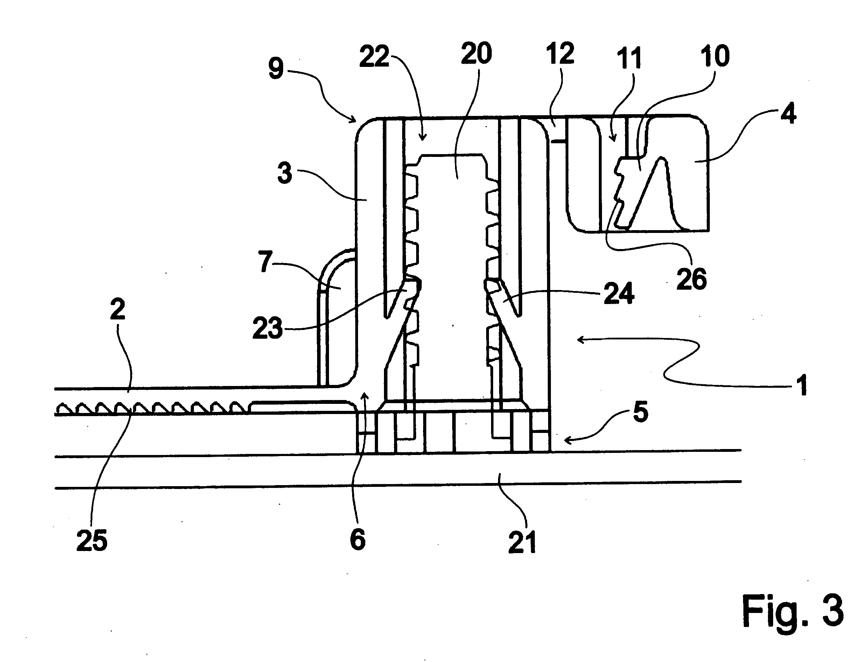

Fig. 3 zeigt einen Schnitt durch den Kabelbinder 1 gemäß Fig. 1 und Fig. 2 im Bereich des Befestigungskörpers 3. In der Darstellung gemäß Fig. 3 ist der Befestigungskörper 3 auf einen Gewindebolzen 20 aufgesteckt, der mit einem Trägerteil 21 verbunden ist. In einem Bolzenaufnahmeraum 22 des Befestigungskörpers 3 sind in Einführrichtung des Gewindebolzens 20 angestellte Halteklauen 23, 24 ausgebildet, die mit dem Gewinde des Gewindebolzens 20 in Eingriff kommen und die Abzugskraft des Kabelbinders 1 von dem Gewindebolzen 20 gegenüber der Aufsteckkraft deutlich erhöhen.

Weiterhin ist Fig. 3 zu entnehmen, dass das Schlingband 2 bei diesem Ausführungsbeispiel mit einer Vielzahl von Bandzähnen 25 ausgebildet ist, die komplementär zu an der Rastzunge 10 ausgeformten Zungenzähnen 26 gestaltet sind, sodass bei Einführen des freien Endes des Schlingbandes 2 in den Durchsteckraum 11 die Bandzähne 25 und die Zungenzähne 26 miteinander in Eingriff kommen und nach Straffen des Schlingbandes eine in Fig. 3 nicht dargestellte umschlungene Gegenstandsanordnung wie ein einzelner Gegenstand, beispielsweise in Gestalt eines verhältnismäßig dicken Kabels oder Rohres, oder wie eine Anzahl von Gegenständen, beispielsweise mehrere im Querschnitt verhältnismäßig kleine Kabel oder Rohre, praktisch unlösbar halten.

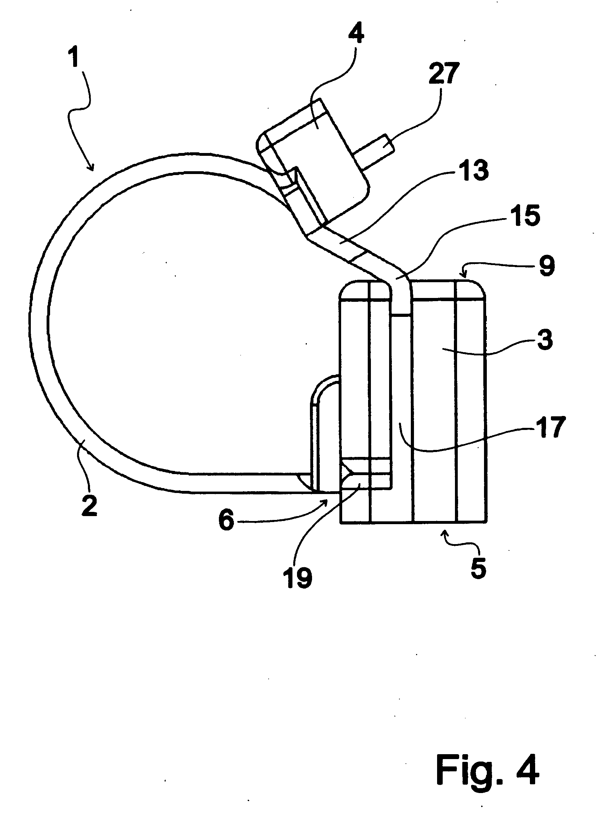

Fig. 4 zeigt in einer Seitenansicht den Kabelbinder 1 gemäß Fig. 1 bis Fig. 3 in einer Anordnung zum Halten einer Gegenstandsanordnung mit einem verhältnismäßig großen Gesamtquerschnitt. Aus Fig. 4 ist ersichtlich, dass in dieser Anordnung das Bandaufnahmeteil 4 von der dem Befestigungsbereich 6 gegenüberliegenden relaxierten Anordnung gemäß Fig. 1 bis Fig. 3 in Richtung der Seite des Befestigungskörpers 3 umgebogen ist, an dem der Bandbefestigungsbereich 6 liegt, und noch oberhalb des Kopfbereiches 9 angeordnet ist. Das freie Ende 27 des Schlingbandes 2 tritt durch das Bandaufnahmeteil 4 durch und ist bereits gekürzt worden.

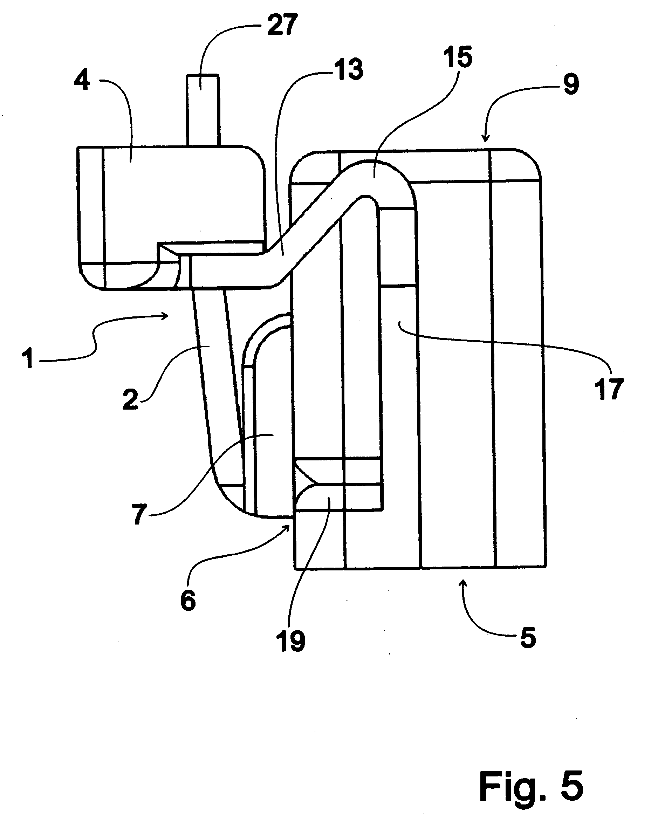

Fig. 5 zeigt den Kabelbinder 1 gemäß Fig. 1 bis Fig. 3 in einer Anordnung zum Halten einer Gegenstandsanordnung mit einem verhältnismäßig kleinen Gesamtquerschnitt. Aus Fig. 5 ist ersichtlich, dass in dieser Anordnung das Schlingband 2 im Wesentlichen gerade gestreckt ist und das Bandaufnahmeteil 4 gegenüber der relaxierten Anordnung gemäß Fig. 1 bis Fig. 3 vollständig auf die Seite des Befestigungskörpers 3 umgeklappt ist, auf der der Bandbefestigungsbereich 6 liegt. Durch das Vorsehen der sich in Richtung des Schlingbandes 2 erstreckenden Klemmrippen 7, 8 lässt sich somit auch eine Gegenstandsanordnung mit einem sehr kleinen Gesamtquerschnitt zuverlässig halten.

Weiterhin ist festzuhalten, dass nach Einführen des Schlingbandes 2 in das Bandaufnahmeteil 4 sowohl bei einem großen als auch bei einem kleinen Querschnitt der zu umschlingenden Gegenstandsanordnung das Bandaufnahmeteil 4 und das freie Ende 27 des Schlingbandes 2 an gegenüberliegenden Seiten des Fußbereiches 5 angeordnet sind, so dass die Vorgänge des Anziehens und des Abschneidens des Überstandes des freien Endes 27 vereinfacht sind, da das Bandaufnahmeteil 4 und das freie Ende 27 dem Benutzer zugewandt sind.

## Patentansprüche

1. Vorrichtung zum Halten einer länglichen Gegenstandsanordnung mit einem Befestigungskörper (3) zum Befestigen an einem Trägerteil (21), mit einem Schlingband (2), das mit einem Ende mit dem Befestigungskörper (3) in Verbindung steht, und mit einem Bandaufnahmeteil (4), das über wenigstens einen biegsamen Verbindungsabschnitt (14, 15) auf einer Seite des Befestigungskörpers (3) angeordnet und mit dem Befestigungskörper (3) verbunden ist, wobei das Schlingband (2) in einem Bandbefestigungsbereich (6) direkt mit dem Befestigungskörper (3) verbunden ist und wobei das Bandaufnahmeteil (4) im relaxierten Zustand des oder jedes Verbindungsabschnittes (14, 15) auf der dem Bandbefestigungsbereich (6) gegenüberliegenden Seite des Befestigungskörpers (3) liegt, **dadurch gekennzeichnet, dass** das Bandaufnahmeteil (4) über zwei seitlich angesetzte Anbindungsbügel (12, 13) sowie über zwei jeweils an einen Anbindungsbügel (12, 13) angeformte Verbindungsabschnitte (14, 15) mit zwei einander gegenüberliegenden Seiten des Befestigungskörpers (3) verbunden ist und dass die Verbindungsabschnitte (14, 15) an seitlich von dem Befestigungskörper (3) abstehenden Anbindungsrippen (16, 17) angesetzt sind.

2. Vorrichtung nach Anspruch 1, **dadurch gekennzeichnet, dass** das Bandaufnahmeteil (4) und der Bandbefestigungsbereich (6) an einander gegenüberliegenden Endbereichen (5, 9) des Befestigungskörpers (3) angeordnet sind.

3. Vorrichtung nach Anspruch 1 oder Anspruch 2, **dadurch gekennzeichnet, dass** sich die Anbindungsrippen (16, 17) bis zu einem Fußbereich (5) des Befestigungskörpers (3) erstrecken und dass im Fußbereich (5) Sockelplatten (18, 19) vorhanden sind, die mit dem Befestigungskörper (3) und den Anbindungsrippen (16, 17) verbunden sind und sich seitlich über den Befestigungskörper (3) hinaus erstrecken.

4. Vorrichtung nach Anspruch 2 oder Anspruch 3, **dadurch gekennzeichnet, dass** seitlich des Bandbefestigungsbereiches (6) wenigstens eine sich in Richtung des Bandaufnahmeteiles (4) erstreckende und in Richtung des Schlingbandes (2) weisende Klemmrippe (7, 8) an dem Befestigungskörper (3) angeformt ist.

## Claims

1. Device for holding an elongated arrangement of objects, comprising a fastening body (3) for fastening to a support member (21), comprising a wrap-around band (2) one end of which is connected to the fastening body (3), and comprising a band receptacle member (4) which is arranged, by means at least one flexible connecting section (14, 15), on one side of the fastening body (3) and connected to said fastening body (3), wherein the wrap-around band (2) is directly connected to the fastening body (3) in a band fastening region (6) and wherein, in the relaxed condition of the or each connecting section (14, 15), the band receptacle member (4) lies on the side of the fastening body (3) opposing the band fastening region (6), **characterised in that** the band receptacle member (4) is connected via two laterally mounted attachment brackets (12, 13) and two connecting sections (14, 15), each formed on an attachment bracket (12, 13), to two mutually opposing sides of the fastening body (3) and that the connecting sections (14, 15) are mounted on attachment ribs (16, 17) which project laterally from the fastening body (3).

2. Device according to claim 1, **characterised in that** the band receptacle member (4) and the band fastening region (6) are arranged on mutually opposing end regions (5, 9) of the fastening body (3).

3. Device according to claim 1 or 2, **characterised in that** the attachment ribs (16, 17) extend as far as a foot region (5) of the fastening body (3) and that, in the foot region (5), socket plates (18, 19) are provided which are connected to the fastening body (3) and the attachment ribs (16, 17) and extend laterally beyond the fastening body (3).

4. Device according to claim 2 or 3, **characterised in that** formed onto the fastening body (3) laterally of the band fastening region (6) is at least one clamping rib (7, 8) extending in the direction of the band receptacle member (4) and facing in the direction of the wrap-around band (2).

## Revendications

1. Dispositif de maintien d'un agencement d'objets de forme allongée, comprenant un élément de fixation (3) destiné à être fixé sur un élément faisant office de support (21), une lanière de serrage (2) dont une extrémité est raccordée à l'élément de fixation (3) et un verrou tendeur d'accrochage (4) qui est disposé par l'intermédiaire d'au moins une portion de raccordement souple (14, 15) sur un côté de l'élément de fixation (3) et qui est relié à l'élément de fixation (3), la lanière de serrage (2) étant en l'occurrence raccordée dans une zone de raccordement de lanière (6) directement à l'élément de fixation (3) et le verrou tendeur d'accrochage (4) se situant en l'occurrence, à l'état de relâchement de la ou de chaque portion de raccordement (14, 15) sur le côté de l'élément de fixation (3) opposé à la zone de raccordement de lanière (6), **caractérisé en ce que** le verrou tendeur d'accrochage (4) est raccordé par l'intermédiaire de deux arceaux de liaison (12, 13) latéralement attenants ainsi que par l'intermédiaire de deux portions de raccordement (14, 15) respectivement réalisées solidaires par moulage d'un arceau de liaison (12, 13), à deux faces respectivement opposées de l'élément de fixation (3) et **en ce que** les portions de raccordement (14, 15) sont disposées attenantes à des nervures de liaison (16, 17) faisant latéralement saillie depuis l'élément de fixation (3).

2. Dispositif selon la revendication 1, **caractérisé en ce que** le verrou tendeur d'accrochage (4) et la zone de raccordement de la lanière (6) sont disposés sur des portions d'extrémité (5, 9) respectivement opposées de l'élément de fixation (3).

3. Dispositif selon la revendication 1 ou la revendication 2, **caractérisé en ce que** les nervures de liaison (16, 17) s'étendent jusqu'à une portion formant semelle (5) de l'élément de fixation (3) et **en ce qu'**il est prévu, au niveau de la portion formant semelle (5), des plaquettes formant socle (18, 19), qui sont raccordées à l'élément de fixation (3) et aux nervures de liaison (16, 17) et qui s'étendent latéralement vers l'extérieur au-dessus de l'élément de fixation (3).

4. Dispositif selon la revendication 2 ou la revendication 3, **caractérisé en ce que**, sur le côté de la zone de fixation de la lanière (6), au moins une nervure de blocage (7, 8) s'étendant dans la direction du verrou tendeur d'accrochage (4) et orientée dans la direction de la lanière de serrage (2), est réalisée solidaire par moulage de l'élément de fixation (3).
